# EUROPÄISCHE PATENTSCHRIFT

(11) **EP 0 897 413 B1**
(45) Veröffentlichungstag und Bekanntmachung des Hinweises auf die Patenterteilung: **15.03.2000**
(21) Anmeldenummer: 97922967.1
(22) Anmeldetag: 06.05.1997
(51) Int. Cl.: C08K 5/5397, C08K 5/523, C08L 71/12

(54) **FLAMMWIDRIGE THERMOPLASTISCHE FORMMASSEN MIT VERBESSERTEM VERARBEITUNGSVERHALTEN**
FLAME-RESISTANT THERMOPLASTIC MOULDING MATERIALS WITH IMPROVED PROCESSING BEHAVIOUR
MATIERES MOULABLES THERMOPLASTIQUES ININFLAMMABLES PRESENTANT UN COMPORTEMENT AMELIORE PENDANT LEUR MISE EN FORME

(30) Priorität: 09.05.1996 DE 19618741
(43) Veröffentlichungstag der Anmeldung: 24.02.1999
(73) Patentinhaber: BASF AKTIENGESELLSCHAFT, 67056 Ludwigshafen (DE)
(72) Erfinder: WEBER, Martin, D-67487 Maikammer (DE); SEIBRING, Joachim, 89609 Altamira Tamps (MX)
(74) Vertreter: Kinzebach, Werner, Dr.
(86) Internationale Anmeldenummer: EP9702290
(87) Internationale Veröffentlichungsnummer: WO9743336

(56) Entgegenhaltungen:
- EP-A- 0 135 726
- EP-A- 0 530 558
- DE-A- 3 234 033
- US-A- 5 278 212

## Beschreibung

Die vorliegende Erfindung betrifft flammwidrige thermoplastische Formmassen mit verbessertem Verarbeitungsverhalten, die Verwendung der erfindungsgemäßen thermoplastischen Formmassen zur Herstellung von Fasern, Folien und Formkörpern und die unter Verwendung dieser Formmassen hergestellten Fasern, Folien und Formkörper.

Polymermischungen aus Polyphenylenether (PPE) und Styrolpolymerisaten sind z.B. aus den US-Patentschriften 3,383,435; 4,128,602 sowie 4,128,603 bekannt. Solche Formmassen eignen sich zur Herstellung von Formteilen, die sich im Vergleich zu schlagzähmodifizierten Styrolpolymerisaten (HIPS, High Impact Polystyrol), die nicht mit Polyphenylenethern abgemischt sind, durch eine bessere Wärmeformbeständigkeit auszeichnen. Eine ausführliche Beschreibung der Eigenschaften dieser Polymermischungen findet sich auch in L.Bottenbruch, "Technische Polymer-Blends", Kunststoff Handbuch 3/2, Hanser Verlag, München, 1993.

Ein wesentlicher Vorteil der Polymerblends aus Polyphenylenether und Styrolpolymerisaten ist darin zu sehen, daß durch Zusatz halogenfreier Flammschutzmittel, wobei insbesondere phosphorhaltige Verbindungen zu erwähnen sind, Formmassen hergestellt werden können, die flammwidrig sind und daher für viele Anwendungen im Bereich der Elektrotechnik eingesetzt werden. Für den Einsatz auf dem Gebiet der Elektrotechnik ist insbesondere die Prüfung der Flammwidrigkeit nach UL 94 (in J.Troitzsch, "International Plastics Flammability Handbook", S. 346 ff., Hanser Verlag, München, 1990) ausschlaggebend. Bei dieser Prüfung werden vertikal befestigte Probekörper mehrfach beflammt. Dabei erhitzt sich der Probekörper sehr stark, was in vielen Fällen dazu führt, daß brennendes Polymermaterial abtropft und die unter dem Stab angebrachte Bodenwatte entzündet. Dieses unerwünschte Verhalten wird insbesondere dann beobachtet, wenn zum Erreichen kurzer Brandzeiten große Mengen an Flammschutzmittel eingesetzt werden müssen.

Es besteht daher Bedarf nach neuen, hochwirksamen Flammschutzmittelkombinationen, die eine Herabsetzung der Flammschutzmittelmenge erlauben.

Aus der Literatur sind eine Reihe von Beispielen bekannt, bei denen Mischungen verschiedener Flammschutzmittel zu Eigenschaftsverbesserungen in thermoplastischen Formmassen geführt haben. So beschreibt beispielsweise die JP 57207641 PPE/HIPS-Blends, bei denen eine Mischung aus Resorcinoldiphenylphosphat (RDP) und Triphenylphosphat (TPPA) verwendet wurde. Aus der DE-OS 32 34 033 sind PPE/HIPS-Blends bekannt, die synergistische Mischungen aus Phosphinoxiden und Mono-Phosphaten als Flammschutzmittel aufweisen. Die Verwendung dieser Flammschutzmittelkombination erlaubt die Herabsetzung der Flammschutzmittelmenge, was die mechanischen Eigenschaften der daraus hergestellten Formmassen positiv beeinflußt. Im Hinblick auf das Verarbeitungsverhalten weisen diese Formmassen jedoch Nachteile auf.

Des weiteren sind auch Mischungen aus phosphorhaltigen Verbindungen mit Stickstoffverbindungen als Flammschutzmittelkombination beschrieben. Beispielsweise beschreibt die JP 05025341 ein Phosphat/Melamin-Gemisch, das als weitere Komponente roten Phosphor umfaßt. Kombinationen von phosphorhaltigen Verbindungen mit Stickstoff- und Schwefelverbindungen beschreibt z.B. die EP 0 496 120. Während die erste Kombination zu einer Verbesserung des Brandverhaltens führt, weist die zweite in der EP 0 496 120 beanspruchte Mischung auch Vorteile bezüglich des Formbelags auf. Solche Mischungen weisen jedoch Nachteile in bezug auf Zähigkeit auf.

Die EP 0 090 523 beschreibt Polyphenylenether-Harze, die zur Verbesserung der Zähigkeit der Formmassen ein mit Hydroxyl- und Carboxygruppen substituiertes Ethylenpolymer enthalten. Als mögliches Flammschutzmittel wird gegebenenfalls substituiertes Triphenylphosphat genannt.

Die EP 0 538 950 beschreibt Polymerzusammensetzungen mit verbesserter Flammfestigkeit, wobei die Zusammensetzung neben einem auf Kautschuk aufgepfropften Copolymer ein Hydroxystyrol-Einheiten aufweisendes Polymer umfaßt. Als mögliche Flammschutzmittel werden mono-, bis- und oligomere Polyphosphate sowie Metall- und Metalloidsalze organischer Phosphorsäurederivate genannt.

Der Erfindung liegt die Aufgabe zugrunde für thermoplastische Formmassen, insbesondere für thermoplastische Formmassen auf Basis von Polyphenylenethern und vinylaromatischen Polymeren, wie HIPS, eine wirksame Flammschutzmittelkombination zur Verfügung zu stellen, die eine Optimierung der Eigenschaften der Formmasse bezüglich Brandverhalten, mechanischer Eigenschaften und Verarbeitungsverhalten erlaubt.

Überraschenderweise wurde nun gefunden, daß diese Aufgabe unter Verwendung einer Kombination aus Oligophosphorverbindungen und Phosphinoxiden gelöst wird.

Gegenstand der Erfindung sind somit flammwidrige thermoplastische Formmassen auf Basis von
A) mindestens einem Polyphenylenether und
B) mindestens einem vinylaromatischen Polymer, die dadurch gekennzeichnet sind, daß sie
C) als Flammschutzmittel eine Mischung aus
   C1) mindestens einer Oligophosphorverbindung der allgemeinen Formel (I) und/oder (II) 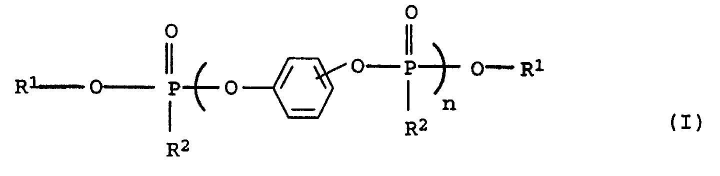 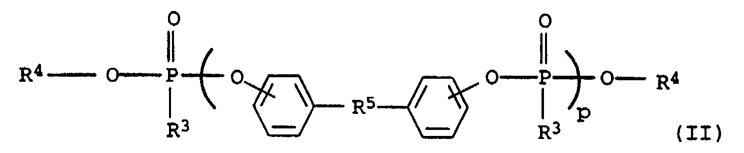 worin
      R¹ und R⁴ unabhängig voneinander für gegebenenfalls substituiertes Alkyl oder Aryl stehen;
      R² und R³ unabhängig voneinander für gegebenenfalls substituiertes Alkyl, Aryl, Alkoxy oder Aryloxy stehen,
      R⁵ für Alkylen, -SO₂-, -CO-, -N=N- oder -(R⁶)P(O)- steht, worin R⁶ für gegebenenfalls substituiertes Alkyl, Aryl oder Alkylaryl steht und n und p unabhängig voneinander einen Wert von 1,0 bis 30 einnehmen, und
   C2) mindestens einem Phosphinoxid der allgemeinen Formel (III) 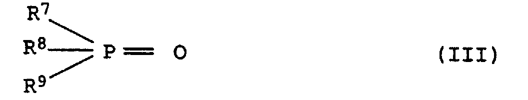 worin R7, R8 und R9 unabhängig voneinander für Wasserstoffatom, gegebenenfalls substituiertes Alkyl, Aryl, Alkylaryl oder Cycloalkyl mit bis zu 40 C-Atomen stehen, enthalten.

Geeignete Sustituenten in Verbindungen der Formeln (I), (II) und (III) sind Cyano, Hydroxy, C₁₋₁₄-Alkyl und Halogen, wie F, Cl, Br, J.

Bevorzugte Alkylreste sind hierbei C₁-C₂₀-Alkyl, insbesondere C₁-C₁₂-Alkyl, wie z.B. Methyl, Ethyl, n-Propyl, n-Butyl, Neopentyl, n-Hexyl, n-Octyl, n-Nonyl, n-Dodecyl, 2-Ethylhexyl, 3,5,5-Trimethylhexyl und substituierte Alkylreste, wie z.B. Cyanoethyl.

Bevorzugte Arylreste sind Phenyl und Naphthyl sowie einfach oder mehrfach substituierte Reste, wie Tolyl, Xylyl, Mesityl und Cresyl.

Bevorzugte Alkylarylreste sind C₁-C₂₀-Alkylaryl- und insbesondere C₁-C₁₂-Alkylarylreste, wobei Alkylteil und Arylteil wie oben definiert sind.

Bevorzugte Cycloalkylgruppen umfassen C₃-C₁₀-Cycloalkylgruppen, wie Cyclobutyl, Cyclopentyl, Cyclohexyl und Cycloheptyl.

Bevorzugte Alkoxyreste sind C₁-C₂₀-Alkoxyreste, wobei der C₁-C₂₀-Alkylteil wie oben definiert ist.

Bevorzugte Aryloxyreste sind solche, worin der Arylanteil wie oben definiert ist.

Bevorzugte Alkylenreste sind C₁-C₆-Alkylenreste, wie Methylen, Ethylen, Propylen und Hexylen.

Die erfindungsgemäßen Formmassen enthalten die Flammschutzmittelkombination vorzugsweise in einem Anteil von 1 bis 20 Gew.-%, bezogen auf das Gesamtgewicht der Formmasse.

Gegebenenfalls kann eine das Brennverhalten verbessernde Menge einer polymeren Hydroxyverbindung zusätzlich enthalten sein.

Gemäß einer bevorzugten Ausführungsform der Erfindung wird eine Formmasse bereitgestellt, enthaltend
A) 5 bis 98 Gew.-% Polyphenylenether,
B) 1 bis 94 Gew.-% Styrolpolymerisate,
C) 1 bis 20 Gew.-% einer Flammschutzmittelkombination, die als
   Komponente C₁ 5 bis 95 Gew.-% mindestens einer Phosphorverbindung obiger allgemeinen Formel (I) und/oder (II) sowie als
   Komponente C₂ 5 bis 95 Gew.-% eines Phosphinoxids obiger allgemeinen Formel (III),
D) 0 bis 50 Gew.-% Schlagzähmodifier,
E) 0 bis 10 Gew.-% eines Hydroxygruppen-tragenden Polymers
   sowie
F) 0 bis 60 Gew.-% üblicher Zusätze.

Hierbei beziehen sich die Gehaltsangaben für C₁ und C₂ jeweils auf das Gesamtgewicht der Flammschutzmittelkombination.

Besonders bevorzugt ist eine Flammschutzmittelkombination, die eine Mischung aus Resorcinol- und/oder Hydrochinondiphenylphosphat mit Triphenylphosphinoxid enthält.

Dabei sind Phosphat und Phosphinoxid vorzugsweise in einem molaren Verhältnis von 1:9 bis 9:1 enthalten.

Die in den erfindungsgemäßen Formmassen enthaltenen Polyphenylenether (Komponente A) sind an sich bekannt. Die Polyphenylenether sind in den erfindungsgemäßen Formmassen in einer Menge von 5 bis 98, vorzugsweise 15 bis 88 und insbesondere 20 bis 82,5 Gew.-%, bezogen auf das Gesamtgewicht der Formmasse, enthalten.

Es handelt sich um Verbindungen auf Basis von substituierten, insbesondere disubstituierten Polyphenylenethern, wobei der Ethersauerstoff der einen Einheit an den Benzolkern der benachbarten Einheit gebunden ist. Vorzugsweise werden in 2- und/oder 6-Stellung zum Sauerstoffatom substituierte Polyphenylenether verwendet. Als Beispiele für Substituenten sind Halogenatome, wie Chlor oder Brom, langkettige Alkylreste mit bis zu 20 Kohlenstoffatomen, wie Lauryl und Stearyl, sowie kurzkettige Alkylreste mit 1 bis 4 Kohlenwasserstoffatomen, die vorzugsweise kein α-ständiges tertiäres Wasserstoffatom aufweisen, z.B. Methyl-, Ethyl-, Propyl- oder Butylreste, zu nennen. Die Alkylreste können wiederum durch Halogenatome, wie Chlor oder Brom, oder durch eine Hydroxylgruppe einfach oder mehrfach substituiert sein. Weitere Beispiele möglicher Substituenten sind Alkoxyreste, vorzugsweise mit 1 bis zu 4 Kohlenstoffatomen oder gegebenenfalls durch Halogenatome und/oder C₁₋₄-Alkylgruppen gemäß obiger Definition einfach oder mehrfach substituierte Phenylreste. Ebenfalls geeignet sind Copolymere verschiedener Phenole, wie z.B. Copolymere von 2,6-Dimethylphenol und 2,3,6-Trimethylphenol. Selbstverständlich können auch Gemische verschiedener Polyphenylenether eingesetzt werden.

Beispiele für erfindungsgemäß verwendbare Polyphenylenether sind:
Poly(2,6-dilauryl-1,4-phenylenether),
Poly(2,6-diphenyl-1,4-phenylenether),
Poly(2,6-dimethoxy-1,4-phenylenether),
Poly(2,6-diethoxy-1,4-phenylenether),
Poly(2-methoxy-6-ethoxy-1,4-phenylenether),
Poly(2-ethyl-6-stearyloxy-1,4-phenylenether),
Poly(2,6-dichlor-1,4-phenylenether),
Poly(2-methyl-6-phenyl-1,4-phenylenether),
Poly(2,6-dibenzyl-1,4-phenylenether),
Poly(2-ethoxy-1,4-phenylenether),
Poly(2-chlor-1,4-phenylenether),
Poly(2,5-dibrom-l,4-phenylenether).

Bevorzugt werden Polyphenylenether eingesetzt, die als Substituenten Alkylreste mit 1 bis 4 Kohlenstoffatomen aufweisen, wie z.B.:
Poly(2,6-dimethyl-1,4-phenylenether),
Poly(2,6-diethyl-1,4-phenylenether),
Poly(2-methyl-6-ethyl-1,4-phenylenether),
Poly(2-methyl-6-propyl-1,4-phenylenether),
Poly(2,6-dipropyl-1,4-phenylenether) und
Poly(2-ethyl-6-propyl-1,4-phenylenether).

Unter Polyphenylenethern im Sinne der Erfindung sollen auch solche verstanden werden, die mit Monomeren, wie Fumarsäure, Maleinsäure, Maleinsäureanhydrid oder Zitronensäure modifiziert sind.

Derartige Polyphenylenether sind u.a. in der WO 87/00540 beschrieben.

Insbesondere werden solche Polyphenylenether in den Zusammensetzungen eingesetzt, die ein mittleres Molekulargewicht M_{w} (Gewichtsmittel) von 8 000 bis 70 000, bevorzugt 12 000 bis 50 000 und insbesondere etwa 20 000 bis 45 000 aufweisen.

Dies entspricht einer Grenzviskosität von etwa 0,18 bis 0,7, bevorzugt von 0,25 bis 0,55, und insbesondere von etwa 0,30 bis 0,50 dl/g, gemessen in Chloroform bei 25°C.

Die Bestimmung der Molekulargewichtsverteilung erfolgt im allgemeinen mittels Gelpermeationschromatographie (Shodex-Trennsäulen 0,8 x 50 cm des Typs A 803, A 804 und A 805 mit THF als Elutionsmittel bei Raumtemperatur). Die Lösung der Polyphenylenether-Proben in THF erfolgt unter Druck bei 110°C, wobei 0,16 ml einer 0,25 Gew.-%igen Lösung injiziert werden.

Die Detektion erfolgt im allgemeinen mit einem UV-Detektor. Die Eichung der Säulen wurde mit Polyphenylenether-Proben durchgeführt, deren absolute Molekulargewichtsverteilungen durch eine GPC-Laser-Lichtstreuungskombination bestimmt wurde.

Das vinylaromatische Polymer (Komponente B) ist in den erfindungsgemäßen Formmassen in Mengen von 1 bis 94, vorzugsweise 10 bis 83, und insbesondere 15 bis 77,5 Gew.-%, bezogen auf das Gesamtgewicht der Formmasse, enthalten. Die Komponente B ist ein vinylaromatisches Polymer, das vorzugsweise mit dem eingesetzten Polyphenylenether verträglich ist. Es kommen sowohl Homo- als auch Copolymerisate von vinylaromatischen Monomeren mit 8 bis 12 C-Atomen in Betracht, welche in Gegenwart eines Kautschuks hergestellt werden. Der Kautschukgehalt beträgt etwa 5 bis 25 Gew.-%, vorzugsweise etwa 8 bis 17 Gew.-%.

Geeignet sind vor allem schlagfestmodifizierte Polystyrole oder Copolymere aus Styrol und anderen vinylaromatischen Verbindungen. Derartige schlagzähmodifizierte Polystyrole sind allgemein als sogenanntes HIPS bekannt und größtenteils im Handel erhältlich. Sie weisen eine Viskositätszahl (VZ) der Hartmatrix von etwa 50 bis etwa 130 ml/g (0,5 %ig in Toluol bei 23°C), vorzugsweise von etwa 60 bis etwa 90 ml/g, auf.

Als monovinylaromatische Verbindungen kommen dabei kern- oder seitenkettenalkylierte Styrole in Betracht. Als Beispiele seien Chlorstyrol, o-Methylstyrol, p-Methylstyrol, Vinyltoluol und p-t-Butylstyrol genannt. Vorzugsweise wird jedoch Styrol allein verwendet.

Die Homopolymerisate werden im allgemeinen nach den bekannten Verfahren in Masse, Lösung und Suspension hergestellt (vgl. Ullmanns Enzyklopädie der techn. Chemie, Band 19, Seiten 265 bis 272, Verlag Chemie, Weinheim 1980). Die Homopolymerisate können Molekulargewichte M_{w} von etwa 3 000 bis 300 000 (Gewichtsmittel) aufweisen, die nach üblichen Methoden bestimmt werden können.

Als Comonomere zur Herstellung von Copolymerisaten kommen z.B. (Meth)acrylsäure, (Meth)acrylsäurealkylester mit 1 bis 4 C-Atomen im Alkylrest, Acrylnitril und Maleinsäureanhydrid sowie Maleinsäureimide, Acrylamid und Methacrylamide sowie deren N,N- oder i N-alkylsubstituierten Derivate mit 1 bis 10 C-Atomen im Alkylrest in Frage. Geeignete Beispiele für solche C₁₋₁₀-Alkylgruppen umfassen Methyl, Ethyl, n- und i-Propyl, n- und tert.-Butyl sowie gegebenenfalls verzweigtes Pentyl, Hexyl, Heptyl, Octyl, Nonyl und Decyl.

Die Comonomeren sind je nach ihrer chemischen Struktur in unterschiedlichen Mengen in den Styrolpolymerisaten enthalten. Entscheidend für den Gehalt an Comonomeren im Mischpolymerisat ist die Mischbarkeit des Copolymerisates mit dem Polyphenylenether. Solche Mischungsgrenzen sind bekannt und beispielsweise in US 4,360,618, US 4,405,753 und in der Veröffentlichung von J.R. Fried, G.A. Hanna, Polymer Eng. Scie., Band 22 (1982), Seite 705 ff beschrieben. Die Herstellung der Copolymeren erfolgt nach bekannten Verfahren, die beispielsweise in Ullmanns Enzyklopädie der techn. Chemie, Band 19, Seite 273 ff, Verlag Chemie, Weinheim (1980), beschrieben sind. Die Copolymerisate weisen im allgemeinen Gewichtsmittel des Molekulargewichts (M_{w}) von 10 000 bis 300 000 auf, die nach üblichen Methoden bestimmt werden können.

Erfindungsgemäß bevorzugt wird als Komponente B schlagfest modifiziertes Polystyrol verwendet.

Die meist angewandten Verfahren zur Herstellung schlagzähmodifizierter Styrolpolymerisate sind die Polymerisation in Masse oder Lösung in Gegenwart eines Kautschuks, wie es beispielsweise in der US-Patentschrift 2,694,692 beschrieben ist, und Verfahren zur Massesuspensionspolymerisation, wie sie beispielsweise in der US-Patentschrift 2,862,906 beschrieben sind. Selbstverständlich sind auch andere Verfahren anwendbar, sofern die gewünschte Teilchengröße der Kautschukphase eingestellt wird.

Als Flammschutzmittel (Komponente C) enthalten die erfindungsgemäßen Formmassen, bezogen auf ihr Gesamtgewicht, 1 bis 20, vorzugsweise 2 bis 19, und insbesondere 2,5 bis 18 Gew.-% einer Flammschutzmittelkombination aus
- C₁:: 5 bis 95 Gew.-% einer Phosphorverbindung der obigen allgemeinen Formel (I) und/oder der Formel (II) sowie
- C₂:: 5 bis 95 Gew.-% eines Phosphinoxids der allgemeinen Formel (III)
wobei die Gew.-%-Angaben für C₁ und C₂ jeweils bezogen sind auf das Gesamtgewicht der Komponente C.

Beispiele für Phosphinoxide (Komponente C₂) sind Triphenylphosphinoxid, Tritolylphosphinoxid, Trisnonylphenylphosphinoxid, Tricyclohexylphosphinoxid, Tris-(n-butyl)-phosphinoxid, Tris-(n-hexyl)-phosphinoxid, Tris-(n-octyl)-phosphinoxid, Tris-(cyanoethyl)-phosphinoxid, Benzylbis(cyclohexyl)-phosphinoxid, Benzylbisphenylphosphinoxid, Phenylbis-(n-hexyl)-phosphinoxid. Besonders bevorzugt eingesetzt werden Triphenylphosphinoxid, Tricyclohexylphosphinoxid, Tris-(n-octyl)-phosphinoxid oder Tris-(cyanoethyl)-phosphinoxid.

Erfindungsgemäß geeignete Oligophosphorverbindungen sind beispielsweise durch Umsetzung von Bisphenolen (vgl. z. B. Ullmann's Encyclopedia of Industrial Chemistry, 5. Auflage, Band A 19, S. 349) mit Triphenylphosphat zugänglich. Beispiele für Oligophosphorverbindungen (Komponente C1) sind Resorcinoldiphenylphosphat und Hydrochinondiphenylphosphat. Weiterhin sind Oligophosphorverbindungen auf Basis von Bisphenol A bzw. Bisphenol S erfindungsgemäß anwendbar.

Dabei ist zu beachten, daß die technisch verfügbaren Produkte C₁ gewöhnlich jeweils Mischungen verschiedener Oligomere bzw. Isomere darstellen.

Als Schlagzähmodifier (Komponente D) werden schlagzähmodifizierende Kautschuke in Anteilen von bis zu etwa 50 Gew.-%, vorzugsweise bis zu etwa 25 Gew.-% und insbesondere bis etwa 20 Gew.-%, bezogen auf das Gesamtgewicht der Masse, eingesetzt.

Als Komponente D können natürliche oder synthetische Kautschuke eingesetzt werden. Neben Naturkautschuk sind als Schlagzähmodifier z.B. Polybutadien, Polyisopren oder Mischpolymerisate des Butadiens und/oder Isoprens mit Styrol und anderen Comonomeren, die eine Glasübergangstemperatur, bestimmt nach K.H.Illers und H.Breuer, Kolloidzeitschrift 190 (1), 16-34 (1963), von etwa -100°C bis +25°C, vorzugsweise unter 0°C aufweisen. Außerdem können auch entsprechend hydrierte Produkte eingesetzt werden.

Bevorzugte Schlagzähmodifier D sind Blockpolymere aus Vinylaromaten und Dienen. Schlagzähmodifier dieses Typs sind bekannt. In der DE-AS 1 932 234, der DE-AS 2 000 118 sowie der DE-OS 2 255 930 sind unterschiedlich aufgebaute vinylaromatische und Dienblöcke umfassende elastomere Blockcopolymerisate beschrieben. Die Verwendung entsprechender hydrierter Blockcopolymerisate gegebenenfalls im Gemisch mit der nicht hydrierten Vorstufe als Schlagzähmodifier ist beispielsweise beschrieben in der DB-OS 2 750 515, DE-OS 2 434 848, DE-OS 3 038 551, EP-A-0 080 666 und WO 83/01254. Auf die Offenbarung obiger Druckschriften wird hiermit ausdrücklich Bezug genommen.

Insbesondere sind erfindungsgemäß brauchbar Vinylaromat-Dien-Blockcopolymerisate aus Blöcken, die eine Hartphase (Blocktyp S) und als Weichphase einen Block B/S aus Dien- und Vinylaromaten-Einheiten enthalten, der statistischen Aufbau besitzt. Der Aufbau kann dabei entlang der Kette im statistischen Mittel homogen oder inhomogen sein.

Man erhält ein solches erfindungsgemäß geeignetes kautschukelastisches Blockcopolymerisat dadurch, daß die Weichphase aus einen statistischen Copolymerisat eines Vinylaromaten mit einem Dien gebildet wird; statistische Copolymerisate von Vinylaromaten und Dienen erhält man durch Polymerisation in Gegenwart eines polaren Cosolvens.

Ein erfindungsgemäß verwendbares Blockcopolymerisat kann z.B. durch eine der folgenden allgemeinen Formeln (1) bis (11) dargestellt werden:

(1) (S-B/S)ₙ;

(2) (S-B/S)ₙ-S;

(3) B/S-(S-B/S)ₙ;

(4) X-[(S-B/S)ₙ]ₘ+1

(5) X-[(B/S-S)ₙ]ₘ+1;

(6) X-[(S-B/S)ₙ-S]ₘ+1;

(7) X-[(B/S-S)ₙ-B/S]ₘ+1;

(8) Y-[(S-B/S)ₙ]ₘ+1;

(9) Y-[(B/S-S)ₙ]ₘ+1;

(10) Y-[(S-B/S)ₙ-S]ₘ+1;

(11) Y-[(B/S-S)ₙ-B/S]ₘ+1;

wobei
- S: für einen vinylaromatischen Block,
- B/S: für die Weichphase aus einem statistisch aus Dien- und vinylaromatischen Einheiten aufgebauten Block steht,
- X: den Rest eines n-funktionellen Initiators,
- Y: den Rest eines m-funktionellen Kopplungsmittels und
- m,n: natürliche Zahlen von 1 bis 10 bedeuten.

Bevorzugt ist ein Blockcopolymerisat einer der allgemeinen Formeln S-B/S-S, X-[-B/S-S]₂ und Y-[-B/S-S]₂ (Bedeutung der Abkürzungen wie vorstehend) und besonders bevorzugt ein Blockcopolymerisat, dessen Weichphase unterteilt ist in Blöcke

(12) (B/S)₁-(B/S)₂;

(13) (B/S)₁-(B/S)₂-(B/S)₁;

(14) (B/S)₁-(B/S)₂-(B/S)₃;

wobei die Indices 1, 2, 3 für unterschiedliche Strukturen in dem Sinne stehen, daß das Vinylaromat/Dien-Verhältnis in den einzelnen Blöcken B/S unterschiedlich ist oder sich innerhalb eines Blocks in den Grenzen (B/S)₁(B/S)₂ kontinuierlich ändert, wobei die Glasübergangstemperatur T_{g} jedes Teilblocks unter 25°C liegt.

Ein Blockcopolymerisat, das mehrere Blöcke B/S und/oder S mit unterschiedlicher Molmasse je Molekül aufweist, ist ebenfalls bevorzugt.

Ebenso kann an die Stelle eines ausschließlich aus vinylaromatischen Einheiten aufgebauten Blocks S ein Block B treten, da es insgesamt lediglich darauf ankommt, daß ein kautschukelastisches Blockcopolymerisat gebildet wird. Solche Copolymerisate können z.B. eine der Strukturen (15) bis (18) haben

(15) B-(B/S)

(16) (B/S)-B-(B/S)

(17) (B/S)₁-B-(B/S)₂

(18) B-(B/S)₁-(B/S)₂.

Bevorzugte Vinylaromaten sind Styrol, o-Methylstyrol, Vinyltoluol oder Mischungen dieser Verbindungen. Bevorzugte Diene sind Butadien, Isopren, Piperylen, 1-Phenylbutadien oder Mischungen dieser Verbindungen. Eine besonders bevorzugte Monomerkombination ist Butadien und Styrol.

Besonders bevorzugt sind die Weichblöcke aus etwa 25 bis 75 Gew.-% Styrol und etwa 25 bis 75 Gew.-% Butadien aufgebaut. Insbesondere bevorzugt sind Weichblöcke, die einen Butadienanteil von etwa 34 bis 69 Gew.-% und einen Styrolanteil etwa von 31 bis 66 Gew.-% enthalten.

Der Gewichtsanteil des Diens im gesamten Blockcopolymer liegt im Falle der Monomerkombination Styrol/Butadien bei 15 bis 65 Gew.-%, derjenige der vinylaromatischen Komponente entsprechend bei 85 bis 35 Gew.-%. Besonders bevorzugt sind ButadienStyrol-Blockcopolymere mit einer Monomerzusammensetzung aus 25 bis 60 Gew.-% Dien und 75 bis 40 Gew.-% an vinylaromatischer Verbindung.

Die Blockcopolymere sind durch anionische Polymerisation in einem unpolaren Lösungsmittel unter Zusatz eines polaren Cosolvens erhältlich. Es besteht dabei die Vorstellung, daß das Cosolvens gegenüber dem Metallkation als Lewis-Base wirkt. Als Lösungsmittel werden bevorzugt aliphatische Kohlenwasserstoffe, wie Cyclohexan oder Methylcyclohexan, verwendet. Als Lewis-Basen werden polare aprotische Verbindungen, wie Ether und tertiäre Amine, bevorzugt. Beispiele für besonders effektive Ether sind Tetrahydrofuran und aliphatische Polyether wie Diethylenglycoldimethylether. Als tertiäre Amine sind Tributylamin und Pyridin zu nennen. Das polare Cosolvens wird dem unpolaren Lösungsmittel in einer geringen Menge, z.B. von 0,5 bis 5 Vol.-%, zugesetzt. Besonders bevorzugt ist Tetrahydrofuran in einer Menge von 0,1 bis 0,3 Vol.-%. Erfahrungsgemäß kommt man mit einer Menge von etwa 0,2 Vol.-% in den meisten Fällen aus.

Durch die Dosierung und Struktur der Lewis-Base werden die Copolymerisationsparameter und der Anteil an 1,2- bzw. 1,4-Verknüpfungen der Dieneinheiten bestimmt. Die erfindungsgemäßen Polymere haben z.B. einen Anteil von 15 bis 40% an 1,2-Verknüpfungen und 85 bis 60% an 1,4-Verknüpfungen bezogen auf alle Dieneinheiten.

Die anionische Polymerisation wird mittels metallorganischer Verbindungen initiiert. Bevorzugt sind Verbindungen der Alkalimetalle, besonders des Lithiums. Beispiele für Initiatoren sind Methyllithium, Ethyllithium, Propyllithium, n-Butyllithium, sek.-Butyllithium und tert.-Butyllithium. Die metallorganische Verbindung wird als Lösung in einem chemisch indifferenten (inerten) Kohlenwasserstoff zugesetzt. Die Dosierung richtet sich nach dem angestrebten Molekulargewicht des Polymers, liegt aber in der Regel im Bereich von 0,002 bis 5 Mol%, wenn man sie auf die Monomeren bezieht.

Die Polymerisationstemperatur kann etwa 0 bis 130°C betragen. Bevorzugt wird der Temperaturbereich von 30 bis 100°C.

Für die mechanischen Eigenschaften ist der Volumenanteil der Weichphase im Festkörper von entscheidender Bedeutung. Erfindungsgemäß liegt der Volumenanteil der aus Dien- und vinylaromatischen Sequenzen aufgebauten Weichphase bei 60 bis 95, bevorzugt bei 70 bis 90 und besonders bevorzugt bei 80 bis 90 Vol.-%. Die aus den vinylaromatischen Monomeren entstandenen Blöcke A bilden die Hartphase, deren Volumenanteil entsprechend 1 bis 40, bevorzugt 10 bis 30 und besonder bevorzugt 10 bis 20 Vol.-% ausmacht.

Es ist darauf hinzuweisen, daß zwischen den oben erwähnten Mengenverhältnissen von vinylaromatischer Verbindung und Dien, den vorstehend angegebenen Grenzwerten der Phasenvolumina und der Zusammensetzung, die sich aus den erfindungsgemäßen Bereichen der Glastemperatur ergibt, keine strenge Übereinstimmung besteht, da es sich um jeweils auf volle Zehnerstellen gerundete Zahlenwerte handelt. Dies könnte vielmehr nur zufällig der Fall sein.

Meßbar ist der Volumenanteil der beiden Phasen mittels kontrastierter Elektronenmikroskopie oder Festkörper-NMR-Spektroskopie. Der Anteil der vinylaromatischen Blöcke läßt sich nach Osmiumabbau des Polydienanteils durch Fällen und Auswiegen bestimmen. Das künftige Phasenverhältnis eines Polymers läßt sich auch aus den eingesetzten Monomermengen berechnen, wenn man jedesmal vollständig auspolymerisieren läßt.

Im Sinne der Erfindung eindeutig definiert wird das Blockcopolymere durch den Quotienten aus dem Volumenanteil in Prozent der aus den B/S-Blöcken gebildeten Weichphase und dem Anteil an Dieneinheiten in der Weichphase, der für die Kombination Styrol/ Butadien zwischen 25 und 70 Gew.-% liegt.

Durch den statischen Einbau der vinylaromatischen Verbindungen in den Weichblock des Blockcopolymeren und die Verwendung von Lewis-Basen während der Polymerisation wird die Glasübergangstemperatur (T_{g}) beeinflußt. Die Glasübergangstemperatur des gesamten Copolymers beträgt vorzugsweise -50°C bis +25°C, bevorzugt weniger als 0°C.

Das Molekulargewicht des Blocks S beträgt vorzugsweise 1000 bis 200.000, insbesondere 3.000 und 80.000 [g/mol]. Innerhalb eines Moleküls können S-Blöcke unterschiedliche Molmasse haben.

Das Molekulargewicht des Blocks B/S beträgt üblicherweise von 2.000 bis 250.000 [g/mol]; bevorzugt sind Werte von 5.000 bis 150.000 [g/mol].

Auch Block B/S kann wie Block S innerhalb eines Moleküls unterschiedliche Molekulargewichtswerte einnehmen.

Das Kupplungszentrum X wird durch die Umsetzung der lebenden anionischen Kettenenden mit einem mindestens bifunktionellen Kupplungsagens gebildet. Beispiele für derartige Verbindungen sind in den US-PSen 3 985 830, 3 280 084, 3 637 554 und 4 091 053 zu finden. Bevorzugt werden z.B. epoxidierte Glyceride wie epoxidiertes Leinsamenöl oder Sojaöl eingesetzt; geeignet ist auch Divinylbenzol. Speziell für die Dimerisierung sind Dichlordialkylsilane, Dialdehyde, wie Terephthalaldehyd, und Ester, wie Ethylformiat oder -benzoat, geeignet.

Bevorzugte Polymerstrukturen sind S-B/S-S, X-[-B/S-S]₂ und Y-[-BS-S]₂, wobei der statistische Block B/S selbst wieder in Blöcke B1/S1-B2/S2-B3/S3-... unterteilt sein kann. Bevorzugt besteht der statistische Block aus 2 bis 15 statistischen Teilblöcken, besonders bevorzugt aus 3 bis 10 Teilblöcken. Die Aufteilung des statistischen Blocks B/S in möglichst viele Teilblöcke Bn/Sn bietet den entscheidenden Vorteil, daß auch bei einem Zusammensetzungsgradienten innerhalb eines Teilblocks Bn/Sn, wie er sich in der anionischen Polymerisation unter praktischen Bedingungen nur schwer vermeiden läßt, sich der B/S-Block insgesamt wie ein nahezu perfektes statistisches Polymer verhält. Es bietet sich deshalb an, weniger als die theoretische Menge an Lewis-Base zuzusetzen, was den Anteil 1,4-Dienverknüpfungen erhöht, die Glastemperatur T_{g} absenkt und die Vernetzungsanfälligkeit des Polymeren mindert. Ein größerer oder ein kleinerer Anteil der Teilblöcke kann mit einem hohen Dienanteil ausgestattet werden. Dies bewirkt, daß das Polymer auch unterhalb der Glastemperatur der überwiegenden B/S-Blöcke eine Restzähigkeit behält und nicht vollständig versprödet.

Alle oben angegebenen Gewichts- und Volumenangaben beziehen sich auf die Monomerkombination Butadien/Styrol. Diese Angaben können jedoch ohne weiteres auf andere zu Styrol und Butadien technisch äquivalente Monomere umgerechnet werden.

Die Blockcopolymeren können dadurch aufgearbeitet werden, daß die Carbanionen mit einem Alkohol, wie Isopropanol, protoniert werden, die Reaktionsmischung angesäuert wird, z.B. mit einem Gemisch aus CO₂ und Wasser und das Lösungsmittel entfernt wird. Die Blockcopolymeren können Oxidationsinhibitoren und Antiblockmittel enthalten.

Als polymere Hydroxyverbindung (Komponente E) können in den thermoplastischen Formmassen etwa 0 bis 10 Gew.-%, insbesondere etwa 0,5 bis 5 Gew.-%, hydroxygruppenhaltige Polymere vom Typ der Kondensationsprodukte aus Bisphenolen und Epichlorhydrin eingesetzt werden. Beispiele für geeignete Bisphenole sind Bisphenol A, B, C, F, S und Z. Siehe auch Ullmann's Encyclopedia of Industrial Chemistry, 5. Auflage, Bd. A 19, S. 349. Bevorzugt verwendet wird das Kondensationsprodukt aus Bisphenol A und Epichlorhydrin, welches unter dem Markennamen Phenoxy®PKH vertrieben wird. Die Hydroxylgruppen enthaltende Verbindung ist außerdem durch eine Viskositätszahl von etwa 20 bis 80 ml/g (gemessen in 0,5%iger CH₂Cl₂-Lösung bei 25°C) charakterisiert.

Als Komponente F) können die erfindungsgemäßen Formmassen auch übliche Zusatzstoffe und Verarbeitungshilfsmittel enthalten. Der Anteil dieser Zusätze beträgt im allgemeinen nicht mehr als etwa 60, vorzugsweise nicht mehr als etwa 50, und insbesondere nicht mehr als etwa 30 Gew.-%, bezogen auf das Gesamtgewicht der Komponenten A) bis D).

Als Zusatzstoffe seien genannt Hitze- und Lichtstabilisatoren, Gleit- und Entformungsmittel, Färbemittel, wie Farbstoffe und Pigmente, in üblichen Mengen. Weitere Zusatzstoffe sind Verstärkungsmittel, wie Glasfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum und Kreide.

Des weiteren kommen Gleitmittel, wie Polyethylenwachs, als Zusatzstoffe in Betracht.

Ruße oder Titandioxid können beispielsweise als Pigmente verwendet werden.

Bei Verwendung von TiO₂ liegt die mittlere Teilchengröße in der Regel im Bereich von etwa 50 bis 400 nm, insbesondere von etwa 150 bis 240 nm. Technische Verwendung finden Rutile und Anatas, die gegebenenfalls mit Metalloxiden, z.B. Aluminiumoxiden, Siliciumoxiden, Oxiden des Zn oder Siloxanen, beschichtet sind.

Als Ruße sollen mikrokristalline, feinteilige Kohlenstoffe verstanden werden (vgl. Kunststofflexikon, 7. Auflage 1980).

Als geeignet seien die Ofenruße, Acetylenruße, Gasruße sowie die i durch thermische Herstellung erhältlichen Thermalruße genannt.

Die Teilchengrößen liegen vorzugsweise im Bereich von etwa 0,01 bis 0,1 µm und die Oberflächen im Bereich von etwa 10² bis 10⁴ m²/g (BET/ASTM D 3037) bei DBP-Absorptionen von etwa 10² bis 10³ ml/100 g (ASTM D 2414).

Die Herstellung der erfindungsgemäßen Formmassen erfolgt zweckmäßigerweise durch Mischen der Komponenten bei Temperaturen im Bereich von etwa 230 bis 320°C in üblichen Mischvorrichtungen, wie z.B. Knetern, Banburry-Mischern und Einschneckenextrudern, vorzugsweise mit einem Zweischneckenextruder. Um eine möglichst homogene Formmasse zu erhalten, ist eine intensive Durchmischung notwendig. Die Reihenfolge des Mischens der Komponenten kann variiert werden, es können zwei oder gegebenenfalls mehrere Komponenten vorgemischt sein oder es können auch alle Komponenten gemeinsam gemischt werden.

Die erfindungsgemäßen Formmassen eignen sich sehr gut zur Herstellung von Formteilen aller Art. Sie können weiterhin zur Herstellung von Folien und Halbzeug im Tiefzieh- oder Blasverfahren verwendet werden.

Aus den erfindungsgemäßen Formmassen lassen sich aufgrund ihrer sehr guten Fließfähigkeit und Verarbeitungsstabilität, z.B. durch Spritzguß oder Extrusion, Formkörper herstellen, die flammwidrig sind und hervorragende mechanische Eigenschaften aufweisen.

Die Erfindung wird nun anhand folgender Beispiele weiter erläutert.

### BEISPIELE

Unter Verwendung der im folgenden aufgelisteten Komponenten A) bis E), werden die erfindungsgemäßen Formmassen 1 bis 4 hergestellt und hinsichtlich ihrer Eigenschaften mit den Vergleichsformmassen V1, V2 und V3 verglichen.

### Komponente A)

Poly-2,6-dimethyl-1,4-phenylenether mit einem mittleren Molekulargewicht (M_{w}) von 40000 g/mol.

### Komponente B₁)

Schlagfestes Polystyrol mit 9 Gew.-% Polybutadien und Zellteilchenmorphologie, mittlere Teilchengröße der Weichkomponente von 1 µm. Die VZ der Hartmatrix betrug 80 ml/g (0,5 %-ig in Toluol bei 23°C).

### Komponente B₂)

Schlagfestes Polystyrol mit 9 Gew.-% Polybutadien und Zellteilchenmorphologie, mittlere Teilchengröße der Weichkomponente von 5 µm. Die VZ der Matrix betrug 80 ml/g (0,5 %-ig in Toluol bei 23°C).

### Komponente C₁)

Resorcinoldiphenylphosphat, Handelsprodukt Fyrolflex RDP (Akzo).

### Komponente C₂)

### Triphenylphosphinoxid

Für Vergleichsversuche wurde Triphenylphosphat (TPPA) eingesetzt.

### Komponente D)

SEPS Blockkautschuk, z.B. Kraton G 1650 (Shell AG).

### Komponente E)

### Phenoxy PKH

### Herstellung der thermoplastischen Formmassen

Die Komponenten A) bis E) wurden auf einem Zweiwellenextruder (ZSK 30 der Fa. Werner & Pfleiderer) bei 270°C gemischt, als Strang ausgetragen, gekühlt und granuliert.

### Bestimmung der Eigenschaften der thermoplastischen Formmassen

Das getrocknete Granulat wurde bei 250 bis 280°C zu Rundscheiben, Flachstäben für die UL 94-Prüfung und Normkleinstäben verarbeitet.

Die Schädigungarbeit Wₛ wurde nach DIN 53 443 bei 23°C bestimmt.

Die Wärmeformbeständigkeit der Proben wurde mittels der Vicat-Erweichungstemperatur, bestimmt nach DIN 53 460, mit einer Kraft von 49,05 N und einer Temperatursteigerung von 50 K je Stunde, an Normkleinstäben ermittelt.

Die Flammwidrigkeit wurde nach UL 94 an Stäben von 1/16"-Dicke bestimmt; die angeführten Brandzeiten stellen die Summe der Brandzeiten aus beiden Beflammungen dar.

Die Fließfähigkeit der Formmassen (Scherstabilität) wurde anhand der prozentualen Änderungen des Drehmoments (ΔD) beim Kneten der Massen in einem Kneter von Typ Haake Rheomix 600 ermittelt, wobei das Drehmoment nach 6 bzw. 26 Minuten verglichen wurde (Knetertemperatur 275°C).

Die Fließfähigkeit der Proben wurde anhand des MVI-Werts (DIN 53735) beurteilt, wobei die Messungen bei 275°C Massetemperatur und 21,6 kg Belastung durchgeführt wurden.

Zusammensetzung und Eigenschaften der hergestellten thermoplastischen Formmassen sind in Tabelle 1 zusammengestellt.

**Tabelle 1:**

| Formmasse Nr. | V1 | V2 | V3 | 1 | 2 | 3 | 4 |
|---|---|---|---|---|---|---|---|
| Komponente (Gew.-%) A | 52 | 52 | 52 | 52 | 52 | 52 | 52 |
| B₁ | 32 | 32 | 32 | 32,5 | 30,5 | 31 | 31 |
| B₂ | - | - | - | - | 2 | 2 | 2 |
| C₁ | - | 13 | 6,5 | 6,5 | 6,5 | 8 | 8 |
| C₂ | 6,5 | - | - | 6,0 | 6,0 | 4 | 3,5 |
| D | 3 | 3 | 3 | 3 | 3 | 3 | 3 |
| TPPA | 6,5 | - | 6,5 | - | - | - | - |
| E | - | - | - | - | - | - | 0,5 |
| Wₛ [Nm] | 42 | 32 | 39 | 43 | 47 | 46 | 44 |
| | | | | | | | |
| Vicat B [°C] | 111 | 114 | 112 | 113 | 112 | 115 | 115 |
| | | | | | | | |
| UL 94 | V-0 | V-1 | V-0 | V-0 | V-0 | V-0 | V-0 |
| Brandzeit [s] | 45 | 66 | 46 | 32 | 33 | 42 | 21 |
| | | | | | | | |
| MVI [ml/10'] | 125 | 89 | 103 | 112 | 111 | 106 | 113 |
| | | | | | | | |
| ΔD (%) | 26 | 4 | 17 | 9 | 9 | 6 | 5 |

Die Meßergebnisse belegen ein überraschend verbessertes Eigenschaftsprofil für die erfindungsgemäßen Formmassen 1 bis 4.

## Patentansprüche

1. Flammwidrige thermoplastische Formmasse, enthaltend
A) mindestens einen Polyphenylenether und
B) mindestens ein vinylaromatisches Polymer,
dadurch gekennzeichnet, daß sie
C) als Flammschutzmittel eine Mischung aus
C₁) mindestens einer Oligophosphorverbindung, ausgewählt unter Verbindungen der allgemeinen Formel (I) und (II) 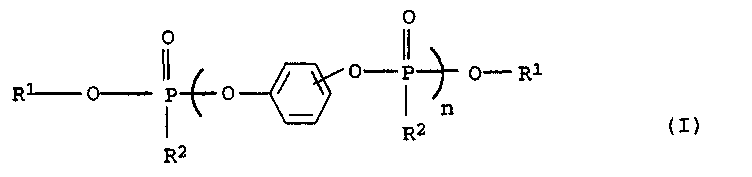 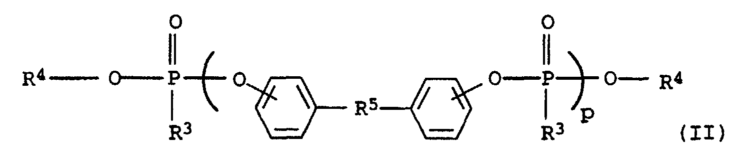 worin
R¹ und R⁴ unabhängig voneinander für gegebenenfalls substituiertes Alkyl oder Aryl stehen;
R² und R³ unabhängig voneinander für gegebenenfalls substituiertes Alkyl, Aryl, Alkoxy oder Aryloxy stehen,
R⁵ für Alkylen, -SO₂-, -CO-, -N=N- oder -(R⁶)P(O)- steht, worin R⁶ für gegebenenfalls substituiertes Alkyl, Aryl oder Alkylaryl steht und
n und p unabhängig voneinander einen Wert von 1,0 bis 30 einnehmen;
und
C₂) mindestens einem Phosphinoxid der allgemeinen Formel III 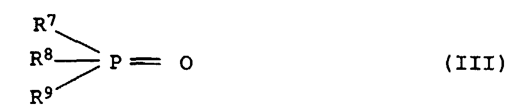 worin R⁷, R⁸ und R⁹ unabhängig voneinander für Wasserstoffatom, gegebenenfalls substituiertes Alkyl, Aryl, Alkylaryl oder Cycloalkyl mit bis zu 40 C-Atomen stehen,
enthält.

2. Formmasse nach Anspruch 1, dadurch gekennzeichnet, daß sie die Flammschutzmittelmischung in einem Anteil von 1 bis 20 Gew.-%, bezogen auf das Gesamtgewicht der Masse, enthält.

3. Formmasse nach Anspruch 1 oder 2, dadurch gekennzeichnet, daß sie eine das Brennverhalten verbessernde Menge wenigstens eines Hydroxygruppen tragenden Polymers enthält.

4. Formmasse nach einem der vorhergehenden Ansprüche, enthaltend
A) 5 bis 98 Gew.-% mindestens eines Polyphenylenethers,
B) 1 bis 94 Gew.-% mindestens eines Styrolpolymerisats,
C) 1 bis 20 Gew.-% einer Flammschutzmittelkombination, die, bezogen auf das Gewicht der Flammschutzmittelkombination, als
Komponente C₁ 5 bis 95 Gew.-% mindestens einer Oligophosphorverbindung obiger allgemeinen Formel (I) und/oder (II)
sowie als
Komponente C₂ 5 bis 95 Gew.-% eines Phosphinoxids obiger allgemeinen Formel (III) umfaßt;
D) 0 bis 50 Gew.-% mindestens eines Schlagzähmodifiers,
E) 0 bis 10 Gew.-% eines Hydroxygruppen tragenden Polymers
sowie
F) 0 bis 60 Gew.-% wenigstens eines üblichen Zusatzes.

5. Formmasse nach Anspruch 4, dadurch gekennzeichnet, daß sie als Flammschutzmittelkombination eine Mischung aus Resorcinoldiphenylphosphat und/oder Hydrochinondiphenylphosphat mit Triphenylphosphinoxid enthält.

6. Formmasse nach einem der vorherigen Ansprüche, dadurch gekennzeichnet, daß Oligophosphorverbindung und Phosphinoxid in einem molaren Verhältnis von 1:9 bis 9:1 enthalten sind.

7. Formmasse nach einem der Ansprüche 3 bis 6, dadurch gekennzeichnet, daß sie 0,5 bis 5 Gew.-% des Hydroxygruppen tragenden Polymers enthält.

8. Formmasse nach einem der Ansprüche 3 bis 7, dadurch gekennzeichnet, daß das Hydroxygruppen tragende Polymer das Reaktionsprodukt eines Bisphenols mit Epichlorhydrin ist.

9. Verwendung der Formmassen nach den Ansprüchen 1 bis 8 zur Herstellung von flammwidrigen Formkörpern, Fasern und Folien.

10. Flammwidrige Formkörper, Fasern und Filme, hergestellt unter Verwendung einer Formmasse nach einem der Ansprüche 1 bis 8.

11. Flammschutzmittelkombination, umfassend eine Kombination aus wenigstens einer Oligophosphorverbindung, ausgewählt unter Verbindungen der allgemeinen Formel (I) und (II), und wenigstens einem Phosphinoxid der allgemeinen Formel (III) gemäß der Definition in Anspruch 1.

12. Flammmschutzmittelkombination nach Anspruch 11, enthaltend Oligophosphorverbindung und Phosphinoxid in einem molaren Verhältnis von 1:9 bis 9:1.

## Claims

1. A flame-retardant thermoplastic molding composition, comprising
A) at least one polyphenylene ether and
B) at least one vinylaromatic polymer,
which comprises
C) a flame-retardant which is a mixture made from
C₁) at least one oligomeric phosphorus compound, selected from the group consisting of compounds of the formulae 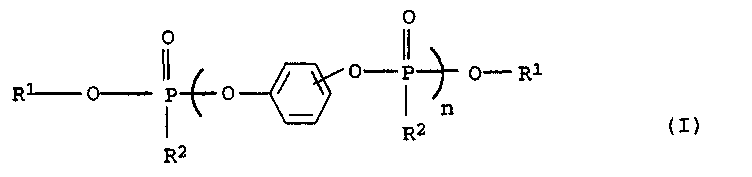 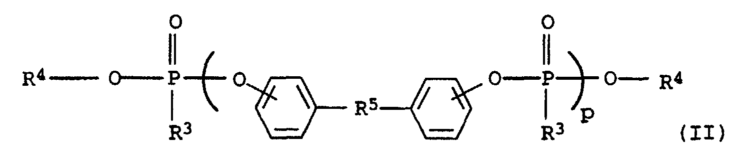 where
R¹ and R⁴, independently of one another, are unsubstituted or substituted alkyl or aryl,
R² and R³, independently of one another, are unsubstituted or substituted alkyl, aryl, alkoxy or aryloxy,
R⁵ is alkylene, -SO₂-, -CO-, -N=N- or -(R⁶)P(O)- where R⁶ is unsubstituted or substituted alkyl, aryl or alkylaryl, and
n and p, independently of one another, are from 1.0 to 30;
and
C₂) at least one phosphine oxide of the formula III 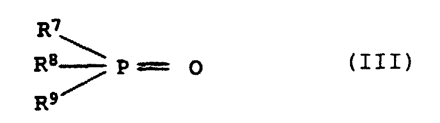 where R⁷, R⁸ and R⁹, independently of one another are hydrogen or unsubstituted or substituted alkyl, aryl, alkylaryl or cycloalkyl having up to 40 carbon atoms.

2. A molding composition as claimed in claim 1, which comprises a proportion of from 1 to 20% by weight of the flame retardant mixture, based on the total weight of the composition.

3. A molding composition as claimed in claim 1 or 2, which comprises at least one hydroxyl-containing polymer in an amount which improves combustion behavior.

4. A molding composition as claimed in any one of the preceding claims, comprising
A) from 5 to 98% by weight of at least one polyphenylene ether,
B) from 1 to 94% by weight of at least one styrene polymer,
C) from 1 to 20% by weight of a flame retardant combination which comprises, based on the weight of the flame retardant combination,
as component C₁ from 5 to 95% by weight of at least one oligomeric phosphorus compound of formula (I) and/or (II) above
and
as component C₂, from 5 to 95% by weight of a phosphine oxide of formula (III) above,
D) from 0 to 50% by weight of at least one impact modifier,
E) from 0 to 10% by weight of a hydroxyl-containing polymer,
and
F) from 0 to 60% by weight of at least one conventional additive.

5. A molding composition as claimed in claim 4, which comprises a flame retardant combination which is a mixture of resorcinol diphenyl phosphate and/or hydroquinone diphenyl phosphate with triphenyl phosphine oxide.

6. A molding composition as claimed in any one of the preceding claims, when the molar ratio of oligomeric phosphorus compound to phosphine oxide is from 1:9 to 9:1.

7. A molding composition as claimed in any one of claims 3 to 6, which comprises from 0.5 to 5% by weight of the hydroxyl-containing polymer.

8. A molding composition as claimed in any one of claims 3 to 7, wherein the hydroxyl-containing polymer is the reaction product of a bisphenol with epichlorohydrin.

9. The use of the molding compositions as claimed in any one of claims 1 to 8 for producing flame-retardant moldings, fibers or films.

10. A flame-retardant molding, fiber or film produced using a molding composition as claimed in any one of claims 1 to 8.

11. A flame-retardant combination comprising a combination of at least one oligomeric phosphorus compound selected from the group consisting of compounds of the formula (I) or (II) and at least one phosphine oxide of the formula (III) as defined in claim 1.

12. A flame-retardant combination as claimed in claim 11, comprising oligomeric phosphorus compound and phosphine oxide in a molar ratio of from 1:9 to 9:1.

## Revendications

1. Masse à mouler thermoplastiques ignifuge, contenant
A) au moins un poly(phénylène éther) et
B) au moins un polymère vinylaromatique,
caractérisée en ce qu'elle contient
C) en tant qu'agent de protection contre les flammes un mélange à base
C₁) d'au moins un oligo-composé du phosphore, choisi parmi les composés de formule générale (I) et (II) 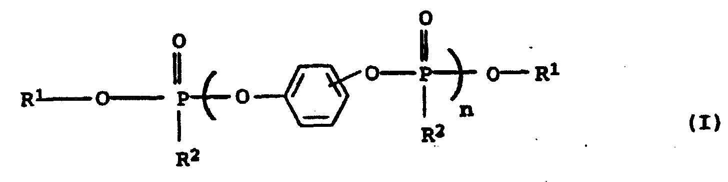 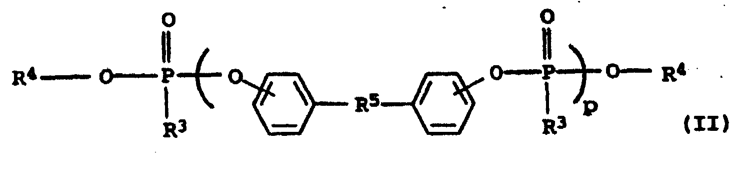 où
R¹ et R⁴ représentent indépendamment les uns des autres un groupement alkyle ou aryle éventuellement substitués ;
R² et R³ représentent indépendamment les uns des autres un groupement alkyle, aryle, alcoxy ou aryloxy éventuellement substitués ;
R⁵ représente un groupement alkylène, -SO₂-, -CO-, -N=N- ou -(R⁶)P(O)-, où R⁶ représente un groupement alkyle, aryle ou alkylaryle éventuellement substitués et
n et p prennent indépendamment l'un de l'autre une valeur de 1,0 à 30;
et
C₂) d'au moins un oxyde de phosphine de formule générale III 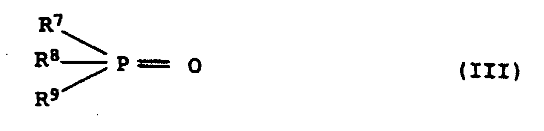
où R⁷, R⁸ et R⁹ sont mis indépendamment les uns des autres pour un atome d'hydrogène, un groupement alkyle, aryle, alkylaryle ou cycloalkyle ayant jusqu'à 40 atomes de C, éventuellement substitués.

2. Masse à mouler selon la revendication 1, caractérisée en ce qu'elle contient le mélange agent de protection contre les flammes en une proportion de 1 à 20% en poids, par rapport au poids total de la masse.

3. Masse à mouler selon la revendication 1 ou 2, caractérisée en ce qu'elle contient un polymère portant au moins un groupement hydroxy en une quantité améliorant le comportement lors de la combustion.

4. Masse à mouler selon l'une quelconque des revendications précédentes, contenant
A) 5 à 98% en poids d'au moins un poly(phénylène éther),
B) 1 à 94% en poids d'au moins un polymère du styrène,
C) 1 à 20% en poids d'une combinaison d'agents de protection contre les flammes comprenant, par rapport au poids de la combinaison d'agents de protection contre les flammes,
en tant que composant C₁), 5 à 95 % en poids d'au moins un oligo-composé du phosphore de formule générale (I) et/ou (II) ci-dessus,
ainsi que
en tant que composant C₂), 5 à 95% en poids d'un oxyde de phosphine de formule générale (III) ci-dessus ;
D) 0 à 50% en poids d'au moins un agent modifiant la résilience,
E) 0 à 10% en poids d'un polymère portant des groupements hydroxy,
ainsi que
F) 0 à 60% en poids d'au moins un additif usuel.

5. Masse à mouler selon la revendication 4, caractérisée en ce qu'elle contient un mélange à base de diphénylphosphate de résorcinol et/ou de diphénylphosphate d'hydroquinone avec un oxyde de triphénylphosphine, en tant que combinaison d'agents de protection contre les flammes.

6. Masses à mouler selon l'une quelconque des revendications précédentes, caractérisée en ce qu'elle contient l'oligo-composé du phosphore et l'oxyde de phosphine en un rapport molaire de 1:9 à 9:1.

7. Masse à mouler selon l'une quelconque des revendications 3 à 6, caractérisée en ce qu'elle contient 0,5 à 5% en poids d'un polymère portant des groupements hydroxy.

8. Masses à mouler selon l'une quelconque des revendications 3 à 7, caractérisée en ce que le polymère portant des groupements hydroxy est le produit de la réaction d'un bisphénol avec de l'épichlorhydrine.

9. Utilisation de masses à mouler selon l'une quelconque des revendications 1 à 8 pour la fabrication de corps moulés, fibres et feuilles ignifuges.

10. Corps moulés, fibres et films ignifuges fabriqués en utilisant une masse à mouler selon l'une quelconque des revendications 1 à 8.

11. Combinaison d'agents de protection contre les flammes, comprenant une combinaison d'au moins un oligo-composé du phosphore, choisi parmi les composés de formule générale (I) et (II), et au moins un oxyde de phosphine de formule générale (III) selon la définition de la revendication 1.

12. Combinaison d'agents de protection contre les flammes selon la revendication 11, contenant l'oligo-composé du phosphore et l'oxyde de phosphine dans un rapport molaire de 1:9 à 9:1.
